# EUROPÄISCHE PATENTANMELDUNG

(11) **EP 3 098 049 A1**
(43) Veröffentlichungstag der Anmeldung: **30.11.2016**
(21) Anmeldenummer: 16171349.0
(22) Anmeldetag: 25.05.2016
(51) Int. Cl.: B29C 45/00

(54) **VERFAHREN UND VORRICHTUNG ZUR BEEINFLUSSUNG EINES ZUSAMMENTREFFENS VON MINDESTENS ZWEI KUNSTSTOFFSCHMELZEN WÄHREND EINER HERSTELLUNG EINES FORMKÖRPERS IN EINEM SPRITZGIESSVERFAHREN**

(30) Priorität: 28.05.2015 DE 102015209789
(71) Anmelder: Universität Stuttgart, 70174 Stuttgart (DE)
(72) Erfinder: Bonten, Christian, 47804 Krefeld (DE); Geyer, Alexander, 70190 Stuttgart (DE); Koslowski, Tristan, 70178 Stuttgart (DE)
(74) Vertreter: Herzog, Fiesser & Partner Patentanwälte PartG mbB

(57) **Zusammenfassung**

Die vorliegende Erfindung betrifft ein Verfahren und eine Vorrichtung zur Beeinflussung eines Zusammentreffens von mindestens zwei Kunststoffschmelzen (120) während einer Herstellung eines Formkörpers in einem Spritzgießverfahren. Das Verfahren weist hierbei die folgenden Schritte auf:
a) Bereitstellen eines Werkzeugs mit mindestens einer Kavität (118) zur Aufnahme einer Kunststoffschmelze (120), wobei das Werkzeug derart ausgestaltet ist, dass bei einem Einfüllen der Kunststoffschmelze (120) in das Werkzeug in mindestens einem Bereich (126) der Kavität (118) sich durch das Zusammentreffen der mindestens zwei Kunststoffschmelzen (120) eine Grenzfläche (110) zwischen den Kunststoffschmelzen (120) ausbildet, wobei das Werkzeug an einer, an den Bereich (126) angrenzenden Wand (130) über einen Hohlraum (128) mit einem einstellbaren Volumen (132) verfügt;
b) Einbringen der Kunststoffschmelze (120) in die Kavität (118) des Werkzeugs unter Druck derart, dass auch das Volumen (132) des Hohlraums (128) mit einem Teil der Kunststoffschmelze (120) gefüllt wird;
c) Verringern des Volumens (132) des Hohlraums (128), wodurch zumindest ein Teil der Kunststoffschmelze (120) aus dem Hohlraum (128) derart in den an den Hohlraum (128) angrenzenden Bereich (126) der Kavität (118) gedrückt wird, dass der Teil der Kunststoffschmelze (120) seitlich auf die Grenzfläche (110) aufgebracht wird;
d) Abkühlen oder Abkühlenlassen der Kunststoffschmelze (120) in der Kavität (118) des Werkzeugs zumindest teilweise unter Aufrechterhaltung des Drucks, wodurch der Formkörper gebildet wird; und
e) Entformen des Formkörpers aus der Kavität (118) des Werkzeugs.

Insbesondere ermöglichen es derartige Verfahren und Vorrichtungen, die mechanische Festigkeit von Grenzflächen, welche sich bei der Herstellung des Formkörpers in dem Spritzgießverfahren ausbilden können, zu erhöhen. Diese Verfahren und Vorrichtungen sind hierbei für eine Vielzahl von Kunststoffen, insbesondere auch für gefüllte Kunststoffe, anwendbar.

## Beschreibung

Die vorliegende Erfindung betrifft ein Verfahren und eine Vorrichtung zur Beeinflussung eines Zusammentreffens von mindestens zwei Kunststoffschmelzen während einer Herstellung eines Formkörpers in einem Spritzgießverfahren.

### Stand der Technik

Aus dem Stand der Technik sind eine Vielzahl von Vorrichtungen und Verfahren zur Herstellung von Formkörpern mittels Spritzgießverfahren bekannt. In dieser Art von Verfahren wird ein Kunststoff, insbesondere ein Thermoplast, in einen Schmelzzustand erwärmt und anschließend in dem Schmelzzustand unter einer Anwendung von Druck in eine Kavität eines Werkzeugs, welche auch als "Formnest" bezeichnet wird, eingebracht. Durch Abkühlen oder Abkühlenlassen der Kunststoffschmelze in der Kavität des Werkzeugs, welche zumindest teilweise unter Aufrechterhaltung des Drucks erfolgt, wird der Formkörper gebildet, welcher schließlich durch Entformen aus der Kavität des Werkzeugs entnommen werden kann. Mit dem Spritzgießverfahren lassen sich einfache, insbesondere aber auch komplexe dreidimensionale Formkörper herstellen. Daher eignet sich das Spritzgießverfahren neben der Herstellung von Verpackungen und allgemeinen Funktionsteilen auch zur Herstellung von technischen Funktionsteilen.

Insbesondere bei der Herstellung von komplexen Formkörpern können mindestens zwei Kunststoffschmelzen innerhalb der Kavität des Werkzeugs derart zusammentreffen, dass es hierbei zu einer Ausbildung mindestens einer Grenzfläche in Form einer oder mehrerer Bindenähte, Fließnähte und/oder Mehrkomponentengrenzflächen in dem mittels des Spritzgießverfahrens hergestellten Formkörper kommen kann. Ein Grund hierfür kann in einer Anwendung von Mehrfach-Angüssen liegen, worunter ein Einbringen von mindestens zwei verschiedenen Kunststoffschmelzen über eine oder mehrere Öffnungen zum selben oder zu verschiedenen Zeitpunkten in die Kavität des Werkzeugs zu verstehen ist. In analoger Weise können sich die Mehrkomponentengrenzflächen im Falle von Mehrkomponentenspritzgießen aufgrund eines Zusammentreffens von Fließfronten mit unterschiedlichen Kunststoffen ausbilden. Ein weiterer Grund kann darin liegen, dass sich eine zunächst einheitliche Kunststoffschmelze, welche über eine einheitliche Fließfront verfügt, innerhalb der Kavität des Werkzeugs in Folge mindestens eines in der Kavität vorhandenen Hindernisses derart in mindestens zwei gesonderte Kunststoffschmelzen aufteilen kann, wobei jede der gesonderten Kunststoffschmelzen nunmehr eine eigene Fließfront aufweist. Treffen nunmehr die Fließfronten von zwei gesonderten Kunststoffschmelzen, unabhängig davon ob diese sich durch die mindestens zwei Angüsse, aufgrund des mindestens einen Hindernisses in der Kavität oder in Folge eines weiteren Grundes ausgebildet haben, insbesondere frontal aufeinander, so können die zugehörigen Fließfronten durch das Aufeinandertreffen zu einem Stillstand kommen und nach dem Abkühlen oder Abkühlenlassen der Kunststoffschmelze in der Kavität des Werkzeugs zu einer Ausbildung einer auch als "Bindenaht" bezeichneten Grenzschicht in dem Formkörper führen. Führen die zugehörigen Fließfronten, insbesondere dann, wenn sie unter einem Winkel aufeinander treffen, auch nach dem Aufeinandertreffen zunächst noch eine relative Bewegung zueinander aus, so bildet sich nach dem Abkühlen oder Abkühlenlassen der Kunststoffschmelze in der Kavität des Werkzeugs ebenfalls eine Grenzschicht in dem Formkörper aus, welche auch als "Fließnaht" bezeichnet wird.

Die durch eine oder mehrere Binde- und/oder Fließnähte und/oder Mehrkomponentengrenzflächen eingebrachten Grenzschichten stellen jedoch häufig einen optischen Mangel in dem mit dem Spritzgießverfahren hergestellten Formkörper dar. In einigen Kunststoffen, insbesondere in so genannten "gefüllten" Kunststoffen, welche über in eine Kunststoffmatrix eingebrachte Bestandteile, vor allem Fasern, verfügen, können die während des Spritzgießverfahrens entstandenen Grenzschichten allerdings auch eine mechanische Schwachstelle in dem Formkörper darstellen. Die mechanische Schwachstelle kann hierbei insbesondere durch eine Umorientierung der Fasern quer zu einer Hauptfließrichtung in der Fließfront entstehen. Da sich über die Grenzschicht hinweg hauptsächlich nur anziehende Kräfte, welche deutlich geringer als die anziehenden Kräfte entlang der Fasern sein können, ausbilden können, kann entlang der Grenzschicht deutlich früher ein mechanisches Versagen des derart ausgestalteten Formkörpers eingeleitet werden. Nachteilig ist weiterhin, dass, insbesondere aufgrund von oftmals sehr hohen Abkühlraten während des Abkühlens des gefüllten Kunststoffes, die für die mechanische Belastbarkeit des Formkörpers ungünstige Orientierung der Fasern beibehalten wird. Eine Rückorientierung der Bestandteile, in der Regel Fasern, in dem mit dem gefüllten Kunststoff gebildeten Formkörper kann in der Regel weder durch Interdiffusion von Makromolekülen aufgrund von Brown'scher Molekularbewegung noch durch nachträgliche Anwendung einer höheren Temperatur zur Umorientierung der Fasern erreicht werden.

In Fällen, in welchen sich eine Ausbildung der Grenzflächen nicht bereits durch eine entsprechende konstruktive Ausgestaltung des Werkzeugs oder des Formkörpers vermeiden lassen, kann es möglich sein, die Grenzflächen in mechanisch weniger beanspruchte Bereiche und/oder in Bereiche, in welchen die Kunststoffschmelze höheren Temperaturen und/oder Drücken ausgesetzt wird, welche negative Auswirkungen der Grenzflächen abschwächen können, zu verlegen. Derartige konstruktive Ausgestaltungen sind allerdings bei Formteilen mit sehr komplexen Geometrien, welche zu ihrer Herstellung häufig die Anwendung von Mehrfach-Angüssen erfordern, in vielen Fällen nicht möglich.

Eine Möglichkeit, das Zusammentreffens von mindestens zwei Kunststoffschmelzen während der Herstellung eines Formkörpers in einem Spritzgießverfahren zu beeinflussen, besteht in einer Erhöhung der Temperatur des Werkzeugs und/oder der in das Werkzeug einzubringenden Kunststoffschmelze. Eine erhöhte Temperatur der Kunststoffschmelze kann hierbei die Viskosität der Kunststoffschmelze verringern und zu einer Erhöhung der Brown'schen Molekularbewegung führen, wodurch sich die Interdiffusion innerhalb der Kunststoffschmelze steigern lässt. Vorzugsweise kann eine so genannte "variotherme" Temperierung des Werkzeugs dazu eingesetzt werden, um das Werkzeug nicht vollständig, sondern insbesondere im Bereich der Grenzfläche, und/oder während des Spritzgießverfahrens zeitlich veränderlich zu temperieren. So kann das Werkzeug unmittelbar vor dem Einbringen der Kunststoffschmelze zusätzlich erwärmt oder im Anschluss an das Füllen der Kavität aktiv abgekühlt werden, etwa durch Verwendung eines zusätzlichen in das Werkzeug eingebrachten Kühlkreislaufs. Allerdings lässt sich hierbei nur bei ausgewählten ungefüllten Kunststoffen eine Verbesserung der optischen Qualität und, nur in besonders seltenen Fällen, auch der mechanischen Qualität der Formkörper erreichen. Vor allem bei gefüllten Kunststoffen kann eine Umorientierung der darin enthaltenen Bestandteile wie Fasern nicht durch eine Temperaturerhöhung erzielt werden.

Um eine Schwächung der mechanischen Eigenschaften in der Grenzfläche entgegen zu wirken, wird weiterhin versucht, eine möglichst weitgehende Rückorientierung der Fasern in einem gefüllten Kunststoff in Richtung der Hauptströmungsrichtung zu erreichen. Hierzu werden Verfahren und Vorrichtungen eingesetzt, welche eine Durchströmung der Kunststoffschmelzen in der Grenzfläche ermöglichen. Hierzu dienen insbesondere die aus dem Stand der Technik bekannten Verfahren des *Gegentakt-Spritzgießens* (GTSG; siehe zum Beispiel DE 41 33 859 A1) und des *Shear Controlled Orientation Injection Molding* (SCORIM; siehe zum Beispiel US 5,766,654 A). Während im Falle des SCORIM ein ausgewähltes hydraulisches Kolbensystem vorgesehen ist, welches dazu eingerichtet ist, damit die Kunststoffschmelze das gesamte Werkzeug durchströmen und solange hin- und her bewegt werden kann, bis die Kunststoffschmelze schließlich ihre Form beibehält, wird im Falle der GTSG hierzu ein zusätzliches Spritzaggregat verwendet. So erfolgt in US 5,766,654 A eine Hin- und Her-Bewegung der Kunststoffschmelze, welche mittels mehreren Hohlräumen, die jeweils über bewegliche Stifte verfügen, in der Kavität hervorgerufen wird. Die Hin- und Her-Bewegung der Kunststoffschmelze wird hierbei derart ausgeführt, dass die Kunststoffschmelze auf die Bindenaht in Längsrichtung in der Absicht einwirken kann, dass so eine bereits ausgebildete Bindenaht sich kräuselt, um so in dem auszubildenden Formkörper weniger störend zu wirken.

Allerdings weisen die genannten und weiteren Verfahren und Vorrichtungen zur Beeinflussung des Zusammentreffens von mindestens zwei Kunststoffschmelzen während der Herstellung eines Formkörpers in einem Spritzgießverfahren Einschränkungen auf und sind darüber hinaus vergleichsweise energie- und kostenintensiv. Die GTSG- und SCORIM-Verfahren erfordern jeweils mindestens zwei Anschnitte, was in vielen Anwendungsfällen nicht sinnvoll ist, da hierdurch in jedem Falle eine Grenzfläche während der Herstellung des Formkörpers ausgebildet wird. Weiterhin kann eine Auslegung der Angüsse problematisch sein, da die Angüsse einerseits einen vergleichsweise großen Querschnitt aufweisen müssen und andererseits möglichst mittig in Bezug auf die Geometrie der Kavität anzubringen sind, was zudem die Möglichkeit zur Ausbildung von unerwünschten Freistrahlen bei der Einbringung der Kunststoffschmelze in die Kavität erhöht. Darüber hinaus sind diese Verfahren und Vorrichtungen nicht für jeden Formkörper geeignet, da hier die Grenzfläche in jedem Fall durchströmt werden muss.

Vor diesem Hintergrund besteht die Aufgabe der vorliegenden Erfindung, ein Verfahren und eine Vorrichtung zur Beeinflussung eines Zusammentreffens von mindestens zwei Kunststoffschmelzen während einer Herstellung eines Formkörpers in einem Spritzgießverfahren bereitzustellen, welche die Nachteile und Einschränkungen des Standes der Technik zumindest teilweise überwinden. Hierzu sollen Verfahren und Vorrichtungen vorgeschlagen werden, mittels denen die Herstellung von Formkörpern mit komplexer Geometrie in einem Spritzgießverfahren möglichst effizient, kostengünstig und energiesparend erfolgen kann. Insbesondere sollen es derartige Verfahren und Vorrichtungen ermöglichen, die mechanische Festigkeit von Grenzflächen, welche sich bei der Herstellung des Formkörpers in dem Spritzgießverfahren ausbilden können, zu erhöhen. Diese Verfahren und Vorrichtungen sollen hierbei für eine Vielzahl von Kunststoffen, insbesondere auch für gefüllte Kunststoffe, anwendbar sein.

### Offenbarung der Erfindung

Diese Aufgabe wird gelöst durch ein Verfahren und eine Vorrichtung zur Beeinflussung eines Zusammentreffens von mindestens zwei Kunststoffschmelzen während einer Herstellung eines Formkörpers in einem Spritzgießverfahren mit den Merkmalen der unabhängigen Patentansprüche. Vorteilhafte Ausgestaltungen finden sich in den abhängigen Patentansprüchen.

In einem ersten Aspekt betrifft die vorliegende Erfindung ein Verfahren zur Beeinflussung eines Zusammentreffens von mindestens zwei Kunststoffschmelzen während einer Herstellung eines Formkörpers in einem Spritzgießverfahren, wobei das Zusammentreffen der mindestens zwei Kunststoffschmelzen in einer Kavität eines Werkzeugs zur Aufnahme der Kunststoffschmelzen zu einer Ausbildung mindestens einer Grenzfläche zwischen jeweils zwei Kunststoffschmelzen führen kann. Unter dem Begriff der "Grenzfläche" wird hierbei insbesondere eine Bindenaht, eine Fließnaht oder eine Mehrkomponentengrenzfläche verstanden, welche dadurch entsteht, dass Fließfronten von zwei gesonderten Kunststoffschmelzen, welche sich durch mindestens zwei in dem Werkzeug vorgesehene Angüsse, aufgrund mindestens eines in der Kavität vorhandenen Hindernisses oder in Folge eines weiteren Grundes ausgebildet haben, aufeinandertreffen. Ohne weitere Maßnahmen können hierdurch die zugehörigen Fließfronten zu einem Stillstand kommen und nach dem Abkühlen oder Abkühlenlassen der Kunststoffschmelze in der Kavität des Werkzeugs zu einer Ausbildung der mindestens einen Bindenaht, Fließnaht und/oder Mehrkomponentengrenzfläche in dem Formkörper führen. Im Falle, dass die zugehörigen Fließfronten auch nach dem Aufeinandertreffen noch eine relative Bewegung zueinander ausführen, kann sich nach dem Abkühlen oder Abkühlenlassen der Kunststoffschmelze ohne weitere Maßnahmen die mindestens eine Fließnaht in dem Formkörper ausbilden.

Das vorliegende Verfahren zeichnet sich dadurch aus, dass ein Werkzeug mit mindestens einer Kavität, welche zur Aufnahme einer Kunststoffschmelze eingerichtet ist bereitgestellt wird, wobei das Werkzeug derart ausgestaltet ist, dass das Werkzeug zusätzlich zu der Kavität über einen Hohlraum, bevorzugt genau einen Hohlraum, mit einem einstellbaren Volumen verfügt, wobei bei einem Einbringen der Kunststoffschmelze in die Kavität des Werkzeugs auch das Volumen des Hohlraums mit einem Teil der Kunststoffschmelze gefüllt wird und durch ein Verringern des Volumens des Hohlraums zumindest ein Teil der Kunststoffschmelze aus dem Hohlraum in einen an den Hohlraum angrenzenden Bereich der Kavität gedrückt wird. Der hier so bezeichnete Hohlraum unterscheidet sich insbesondere dadurch von der Kavität bzw. einer Nebenkavität, da er im Gegensatz sowohl zu der Kavität als auch zu der Nebenkavität nicht über ein eigenes Angusssystem verfügt. Darüber hinaus ist der Hohlraum, wie unten dargelegt, ebenfalls im Gegensatz sowohl zu der Kavität als auch zu der Nebenkavität am Ende des vorliegenden Verfahrens nicht mit der abgekühlten Kunststoffschmelze gefüllt. Unter einem Bereich wird hierbei ein Volumen in der Kavität des Werkzeugs verstanden, welcher in der Nähe derjenigen Stelle liegt, an welcher ein Fachmann vernünftigerweise aufgrund seines Fachwissens, von Messungen und/oder Simulationen der räumlichen und/oder zeitlichen Ausbreitung der Kunststoffschmelze in der Kavität das Auftreten mindestens einer Grenzfläche angenommen werden kann. Unter Berücksichtigung dieser Überlegungen und/oder Ergebnisse kann der Fachmann mindestens eine Stelle in der Wand des Werkzeugs bestimmen, an welcher daher der vorzugsweise eine Hohlraum mit einstellbarem Volumen in vorteilhafter Weise eingebracht werden kann. Gegebenenfalls kann die entsprechende Stelle auch durch eine geringe Anzahl von Versuchen, welche etwa an einem Prototypen des Werkzeugs durchgeführt werden, optimiert und/oder festgelegt werden.

Als erfindungsgemäße Maßnahme kann durch eine Vornahme des Drückens des Teils der Kunststoffschmelze aus dem Hohlraum in den an den Hohlraum angrenzenden Bereich der Kavität Einfluss auf die Ausgestaltung der in dem Bereich der Kavität auftretenden Grenzfläche zwischen den dort zusammentreffenden Kunststoffschmelzen genommen werden. In Folge dieses Einflusses können hierdurch Grenzflächen, welche ohne weitere Maßnahmen wie oben beschrieben in Form von Bindenähten und/oder Fließnähten und/oder Mehrkomponentengrenzflächen in dem Formkörper auftreten würden, vermieden oder in Bezug auf ihre Ausgestaltung, insbesondere im Hinblick auf ihre Form und Größe, vorzugsweise in Richtung auf eine geringer Größe der Grenzfläche, auf eine optisch weniger auffallende Form der Grenzfläche und/oder auf eine mechanisch belastbarere Form der Grenzfläche verändert werden. Darüber hinaus können in Folge dieses Einflusses insbesondere auch Fasern, über welche ein damit gefüllter Kunststoff verfügen kann, zu einem überwiegenden Teil in Bezug auf eine Hauptfließrichtung der Kunststoffschmelze in dem betreffenden Bereich der Kavität rückorientiert werden.

Das vorliegende Verfahren umfasst die im Folgenden im Einzelnen beschriebenen Schritte a) bis e), welche bevorzugt in der angegebenen Reihenfolge durchgeführt werden können. Hierbei können die einzelnen Schritte nacheinander ausgeführt werden; allerdings kann es auch vorteilhaft sein, wenn, je nach den spezifischen Anforderungen, ein oder mehrere Schritte zumindest teilweise auch gleichzeitig durchgeführt werden. Dies kann insbesondere auf Schritt c) zutreffen, welcher vorzugsweise vor oder während Schritt d) durchgeführt werden kann.

Hierbei umfasst das vorliegende Verfahren zur Beeinflussung eines Zusammentreffens von mindestens zwei Kunststoffschmelzen während einer Herstellung eines Formkörpers in einem Spritzgießverfahren die folgenden Schritte:
a) Bereitstellen eines Werkzeugs mit mindestens einer Kavität zur Aufnahme einer Kunststoffschmelze, wobei das Werkzeug derart ausgestaltet ist, dass bei einem Einfüllen der Kunststoffschmelze in das Werkzeug in mindestens einem Bereich der Kavität sich durch das Zusammentreffen der mindestens zwei Kunststoffschmelzen eine Grenzfläche zwischen den Kunststoffschmelzen ausbildet, wobei das Werkzeug an einer, an den Bereich angrenzenden Wand über einen Hohlraum mit einem einstellbaren Volumen verfügt;
b) Einbringen der Kunststoffschmelze in die Kavität des Werkzeugs unter Druck derart, dass auch das Volumen des Hohlraums mit einem Teil der Kunststoffschmelze gefüllt wird;
c) Verringern des Volumens des Hohlraums, wodurch zumindest ein Teil der Kunststoffschmelze derart aus dem Hohlraum in den an den Hohlraum angrenzenden Bereich der Kavität gedrückt wird, dass der Teil der Kunststoffschmelze seitlich auf die Grenzfläche aufgebracht wird;
d) Abkühlen oder Abkühlenlassen der Kunststoffschmelze in der Kavität des Werkzeugs zumindest teilweise unter Aufrechterhaltung des Drucks, wodurch der Formkörper gebildet wird; und
e) Entformen des Formkörpers aus der Kavität des Werkzeugs.

Das vorliegende Verfahren kann vorzugsweise als ein diskontinuierliches Verfahren ausgebildet sein, worunter hier eine Vorgehensweise verstanden wird, gemäß der jeweils ein Formkörper nach dem anderen Formkörper hergestellt wird, wobei das Verfahren jeweils nach dem Entformen eines ersten Formkörpers aus der Kavität des Werkzeugs gemäß Schritt e) erneut mit dem Einfüllen weiterer Kunststoffschmelze gemäß Schritt b) zur Herstellung eines weiteren Formkörpers fortgesetzt werden kann.

Gemäß Schritt a) wird das Werkzeug, das zur Durchführung eines Spritzgießverfahrens eingerichtet ist, bereitgestellt. Unter dem Werkzeug wird hierbei ein mechanisch stabiler Körper verstanden, welcher welche zur Vornahme eines Angusses über mindestens eine Öffnung zum Einfüllen der Kunststoffschmelze und mindestens eine Kavität verfügt, die zur Aufnahme einer Kunststoffschmelze eingerichtet ist und welche im wesentlichen Geometrie und Oberflächenstruktur des herzustellenden Formkörpers festlegt. Insbesondere um die Herstellung des Werkzeugs und/oder das Entformen des Formkörpers aus der Kavität des Werkzeugs auf einfache Weise zu ermöglichen, kann das Werkzeug hierbei vorteilhaft auch aus mindestens zwei miteinander verbundenen Teilen bestehen, welche derart gegeneinander beweglich gelagert sein können, dass hierdurch der hergestellte Formkörper aus dem Werkzeug entnommen oder geworfen werden kann. Das Werkzeug kann darüber hinaus vorzugsweise über mindestens eine Einrichtung zur Erwärmung und/oder Abkühlung mindestens eines Teils des Werkzeugs verfügen, mittels welcher die Kunststoffschmelze im Werkzeug aktiv erwärmt bzw. abgekühlt werden kann.

Insbesondere um einen Formkörper mit einer komplexen Geometrie herzustellen zu können, verfügt das Werkzeug im vorliegenden Verfahren über eine Ausgestaltung, bei welcher bei einem Einfüllen der Kunststoffschmelze in die Kavität des Werkzeugs ein Zusammentreffen von mindestens zwei Fließfronten, welche von mindestens zwei gesonderten Kunststoffschmelzen herrühren, in mindestens einem Bereich der Kavität auftritt. Wie oben beschrieben, kann dies durch mindestens zwei in dem Werkzeug vorgesehene Angüsse, aufgrund mindestens eines in der Kavität vorhandenen Hindernisses oder in Folge eines weiteren Grundes geschehen.

Erfindungsgemäß ist das vorliegende Werkzeug derart ausgestaltet, dass das Werkzeug an einer, an den Bereich der Kavität angrenzenden Wand über einen Hohlraum, bevorzugt genau einen Hohlraum, mit einem einstellbaren Volumen verfügt. Wie oben beschrieben, verfügt das Werkzeug somit zusätzlich zu der Kavität, deren Volumen durch die Form des Werkzeugs festgelegt ist, über einen Hohlraum, dessen Volumen einstellbar ist, insbesondere verringert werden kann.

In einer bevorzugten Ausgestaltung kann das Volumen des Hohlraums hierbei mittels eines in der Wand des Werkzeugs befindlichen, beweglichen Stempels eingestellt werden und das Verringern des Volumens des Hohlraums gemäß c) durch Bewegen einer Stempelfläche in Richtung der Kavität erfolgen. Unter einem Stempel wird hierbei eine möglichst ebene, bewegliche Fläche verstanden, welche derart eingerichtet ist, dass sie durch die Bewegung eine erste Einstellung, bei welcher der Hohlraum über ein beliebiges Volumen bis zu einem maximalen Volumen verfügen kann, und eine zweite Einstellung, bei welcher der Hohlraum vollständig verschlossen sein kann, annehmen kann.

Das Verringern des Volumens des Hohlraums gemäß Schritt c) kann daher vorzugsweise solange erfolgen, bis die Stempelfläche die zweite Einstellung annimmt und hierbei die an den Hohlraum angrenzende Wand im Werkzeug derart erreicht hat, dass der Hohlraum vollständig verschlossen werden kann. Auf diese Weise können der Stempel und die Wand eine glatte Fläche ausbilden, wodurch die Form des herzustellenden Formkörpers von dem Hohlraum unbeeinflusst bleibt. Je nach Art der Ausgestaltung kann das Volumen des Hohlraums derart verringert werden, dass noch ein kleinerer Hohlraum mit einem geringeren Volumen als zuvor verbleibt.

Zum Bewegen der Stempelfläche kann der Stempel vorzugsweise einen Antrieb aufweisen, wobei das Bewegen der Stempelfläche durch Betätigen des Antriebs erfolgen kann. Als Antrieb kann hierbei insbesondere ein elektrischer, ein hydraulischer oder ein mechanischer Antrieb dienen.

Gemäß Schritt b) wird die Kunststoffschmelze derart unter Druck in die Kavität des Werkzeugs eingefüllt, dass sowohl die mindestens eine Kavität des Werkzeugs vorzugsweise vollständig mit der Kunststoffschmelze als auch das Volumen des Hohlraums vorzugsweise vollständig mit einem Teil der Kunststoffschmelze gefüllt wird. Hierbei ist das Werkzeug geschlossen, so dass das Innere des Werkzeugs die mindestens eine hohle Kavität zur Aufnahme der Kunststoffschmelze ausbildet. Gleichzeitig nimmt der in die Wand des Werkzeugs eingebrachte Hohlraum die erste Einstellung an, d.h. er ist geöffnet, insbesondere durch Betätigung des zugehörigen Antriebs zum Bewegen der mindestens einen Stempelfläche des in der Wand des Werkzeugs befindlichen, mindestens eines beweglichen Stempels, welcher zur Einstellung des Volumens des Hohlraums eingerichtet ist. Im Unterschied zum Spitzgießverfahren nach dem Stand der Technik wird gemäß dem vorliegenden Verfahren somit ein bestimmter Teil der Kunststoffschmelze in den zusätzlich vorgesehenen Hohlraum eingefüllt.

Als die während Schritt b) in das Werkzeug eingefüllte Kunststoffschmelze dient ein in einen Schmelzzustand gebrachter Kunststoff, insbesondere ein Thermoplast, welches durch Abkühlen oder Abkühlenlassen aus dem Schmelzzustand in einen festen Zustand übergehen kann, wobei der Formkörper in dem festen Zustand vorliegt. Der Kunststoff kann ungefüllt oder gefüllt sein, wobei der gefüllte Kunststoff eine Kunststoffmatrix aufweist, in welche weitere Bestandteile, insbesondere Fasern, eingebracht sein können. Der Kunststoff, die Kunststoffmatrix und/oder die hierein eingebrachten Bestandteile können insbesondere klar, durchsichtig oder durchscheinend, aber, je nach gewünschter Ausgestaltung, auch intransparent sein.

Das Einfüllen der Kunststoffschmelze unter Druck in die Kavität des geschlossenen Werkzeugs kann hierbei vorzugsweise mittels einer Schnecke, welche rotierbar und/oder axial in einem Zylinder beweglich gelagert sein kann, erfolgen. An einem Ende der Schnecke kann sich hierbei ein Einfülltrichter zum Beschicken mit dem Kunststoff, vorzugsweise in Form eines Granulats, am anderen Ende der Schnecke, welche auch als "Schneckenspitze" bezeichnet werden kann, eine Düse befinden. Der Kunststoff in Form des Granulats kann in Richtung der Schneckenspitze gefördert werden, wobei der Kunststoff insbesondere durch in dem Zylinder vorhandene Wärme und/oder durch auftretende Friktionswärme, welche bei einem Zerteilen und/oder Scheren des Granulats entstehen kann, in den Zustand der Kunststoffschmelze übergehen kann.

Während Schritt b) kann zumindest teilweise eine Erhöhung der Temperatur einer an den Hohlraum angrenzenden Wand erfolgen. Auf diese Weise kann verhindert werden, dass die Kunststoffschmelze in dem Hohlraum fest werden kann. Durch die vorzugsweise konstante oder dynamische Erhöhung der Temperatur in an den Hohlraum angrenzenden Oberflächen kann vielmehr sichergestellt werden, sondern dass die Kunststoffschmelze in dem Hohlraum in der Form als Schmelze verbleibt, in welcher sie gemäß Schritt c) in den an den Hohlraum angrenzenden Bereich der Kavität gedrückt werden kann. Hierzu können der Stempel und/oder mindestens eine der Wände des Hohlraums über eine Heizeinrichtung verfügen, insbesondere in Form eines elektrisch beheizbaren Heizelements und/oder in Form mindestens einer Zu- und Abführung für ein oder mehrere Fluide mit erhöhter Temperatur.

Nach dem Einfüllen der Kunststoffschmelze in die mindestens eine Kavität des Werkzeugs und den vorzugsweise genau einen, zusätzlich vorgesehenen Hohlraum ist es vorteilhaft, wenn die Schnecke den am Anguss anliegenden Druck noch für eine bestimmte Zeit weiterhin aufrecht erhält. Dieses auch als "Nachdruckphase" bezeichnete Zeitintervall kann insbesondere dafür dienen, um eine bei der Abkühlung der Kunststoffschmelze auftretende Schwindung des Kunststoffs zu kompensieren sowie um eine Ausbildung von Einfallstellen und/oder Lunkern bei der Abkühlung der Kunststoffschmelze zu vermeiden.

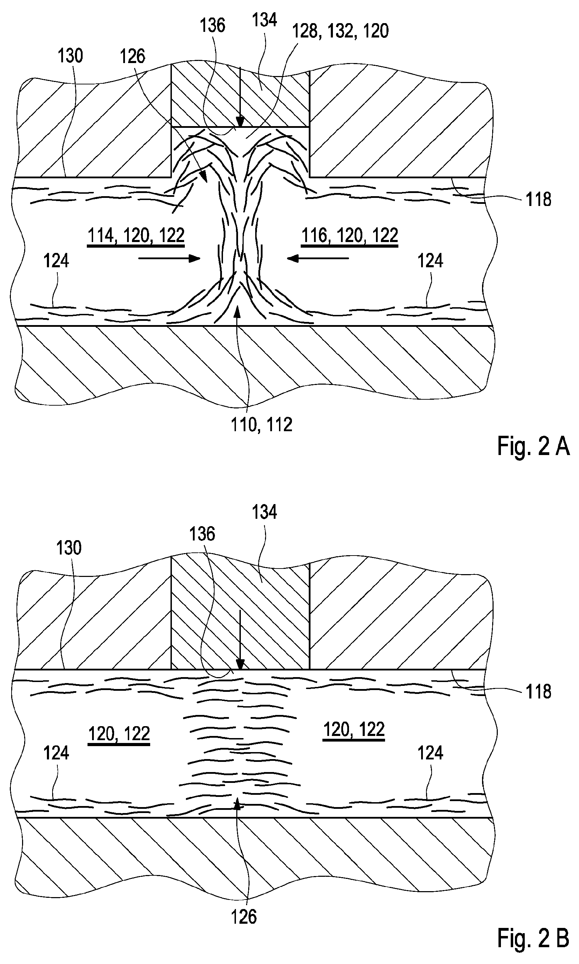

Gemäß Schritt c) wird das Volumen des Hohlraums verringert, wodurch zumindest ein Teil der Kunststoffschmelze aus dem Hohlraum in den an den Hohlraum angrenzenden Bereich der Kavität zurückgedrückt wird, wobei in dem mindestens einem Bereich der Kavität bei einem Einfüllen der Kunststoffschmelze in das Werkzeug das Zusammentreffen der mindestens zwei Kunststoffschmelzen auftritt. Erfindungsgemäß wird hierbei der Teil der Kunststoffschmelze seitlich auf die Grenzfläche aufgebracht. Hierbei bezeichnet der Begriff "seitlich" eine insbesondere in Figur 2 schematisch dargestellte Art der Aufbringung der Kunststoffschmelze auf die Grenzfläche. Hierbei kann die Kunststoffschmelze nicht, wie aus dem Stand der Technik bekannt, senkrecht zur Längsrichtung auf die Grenzfläche einwirken, sondern wirkt auf die Grenzfläche durch eine seitliche Beaufschlagung zielgerichtet ein. Hierdurch kann, wie ebenfalls aus Figur 2 hervorgeht, die Grenzfläche in eine gewünschte, für den Fachmann weniger störende Richtung verändert werden. Darüber hinaus können hier ebenfalls als Folge des beschriebenen Einflusses auch in der Kunststoffmatrix vorhandene Fasern zu einem überwiegenden Teil rückorientiert werden. Somit findet erfindungsgemäß keine Hin- und Her-Bewegung der Kunststoffschmelze statt, was aufgrund der oben genannten Aufgabe der vorliegenden Erfindung, die mechanische Festigkeit der Grenzflächen, welche sich bei der Herstellung des Formkörpers in dem Spritzgießverfahren ausbilden können, zu erhöhen, auch nicht erwünscht ist. Insoweit sind mehrere Hohlräume, welche derart ausgestaltet sind, dass sie die Kunststoffschmelze in der Kavität während des Spritzgießverfahrens aktiv bewegen können, hier nicht erforderlich. Vielmehr genügt erfindungsgemäß das Bereitstellen eines Hohlraums, bevorzugt genau eines Hohlraums, welcher derart in dem Werkzeug angeordnet ist, dass die Kunststoffschmelze aus dem Hohlraum seitlich auf die Grenzfläche aufbringbar ist.

Durch die Vornahme des Zurückdrückens des Teils der Kunststoffschmelze aus dem Hohlraum in den an den Hohlraum angrenzenden Bereich der Kavität kann somit auf erfindungsgemäße Weise Einfluss auf die Ausgestaltung der in dem Bereich der Kavität auftretenden Grenzfläche zwischen den dort zusammentreffenden Kunststoffschmelzen genommen werden. In Folge dieses Einflusses lassen sich Grenzflächen, welche ohne weitere Maßnahmen wie oben beschrieben in Form von Bindenähten und/oder Fließnähten und/oder Mehrkomponentengrenzflächen in dem Formkörper auftreten würden, vollständig vermeiden oder in eine gewünschte, für den Fachmann weniger störende Richtung verändern. Darüber hinaus können in Folge dieses Einflusses in einer besonders bevorzugten Ausgestaltung auch Bestandteile, insbesondere Fasern, in einem gefüllten Kunststoff zu einem überwiegenden Teil rückorientiert werden.

In einer bevorzugten Ausgestaltung wird hierbei das Volumen des Hohlraums vollständig verringert, bis der Stempel und die Wand eine glatte Fläche ausbilden. Dies kann insbesondere dadurch erfolgen, dass die Stempelfläche die oben beschrieben zweite Einstellung annimmt und hierbei die an den Hohlraum angrenzende Wand im Werkzeug derart erreicht hat, dass der Hohlraum vollständig verschlossen werden kann. Je nach Art der Ausgestaltung kann das Volumen des Hohlraums aber auch derart verringert werden, dass nur noch ein kleinerer Hohlraum mit einem geringem Volumen als zuvor verbleibt.

In einer besonders bevorzugten Ausgestaltung erhält die Schnecke den in der oben beschriebenen Nachdruckphase an dem Anguss anliegenden Druck auch noch über die Zeit, an welcher das Verringern des Volumens des Hohlraums gemäß Schritt c) erfolgt, weiterhin aufrecht.

Gemäß Schritt d) erfolgt im Anschluss an Schritt c) und/oder zumindest teilweise zeitgleich mit Schritt c) während einer so genannten "Abkühlphase" ein Abkühlen oder Abkühlenlassen der Kunststoffschmelze in der Kavität des Werkzeugs, wodurch der gewünschte Formkörper gebildet wird. Hierzu kann das Werkzeug vorzugsweise über mindestens eine Einrichtung zur Abkühlung mindestens eines Teils des Werkzeugs verfügen, insbesondere um den Abkühlvorgang zu beschleunigen. Auch während der Abkühlung wird zumindest teilweise der an dem Anguss anliegende Druck aufrechterhalten. Allerdings kann nach einiger Zeit der anliegende Druck verringert und vollständig weggenommen werden; der nach dem Wegnehmen des Drucks ablaufende Verfahrensschritt kann auch als "Restkühlzeit" bezeichnet werden. Insbesondere in dem oben beschriebenen diskontinuierlichen Verfahren kann die Restkühlzeit dazu eingesetzt werden, um die Schnecke für eine Durchführung eines weiteren Einfüllschritts gemäß Schritt b) vorzubereiten.

Gemäß Schritt e) erfolgt, vorzugsweise am Anschluss an die Restkühlzeit, ein Entformen des Formkörpers aus der Kavität des Werkzeugs. Hierzu wird das Werkzeug, welches derart ausgestaltet sein kann, dass der damit hergestellte Formkörper auf möglichst einfache Weise aus dem Werkzeug entnommen oder geworfen werden kann, geöffnet.

Zur Durchführung des erfindungsgemäßen Verfahrens kann eine elektronisch steuerbare Einrichtung, insbesondere eine Datenverarbeitungsanlage, vorgesehen sein, welche einen Programmcode, der zur Durchführung des Verfahrens eingerichtet ist, aufweist und ausführt.

In einem weiteren Aspekt betrifft die vorliegende Erfindung eine Vorrichtung zur Beeinflussung eines Zusammentreffens von mindestens zwei Kunststoffschmelzen während einer Herstellung eines Formkörpers in einem Spritzgießverfahren. Die vorliegende Vorrichtung, welche insbesondere zur Durchführung des Verfahrens gemäß der vorliegenden Erfindung eingerichtet ist, umfasst ein Werkzeug mit mindestens einer Kavität zur Aufnahme einer Kunststoffschmelze. Hierbei ist das Werkzeug derart ausgestaltet, dass sich bei einem Einfüllen der Kunststoffschmelze in das Werkzeug in mindestens einem Bereich in der Kavität das Zusammentreffen der mindestens zwei Kunststoffschmelzen auftreten kann. Je nach Form und Lage der mindestens einen zu erwartenden Grenzfläche, welche sich aufgrund des Zusammentreffens der mindestens zwei Kunststoffschmelzen in der Kavität ausbilden kann, weist das Werkzeug an den betreffenden Stellen an Wand des Werkzeugs einen Hohlraum, bevorzugt genau einen Hohlraum, mit einem einstellbaren Volumen auf, welcher derart in dem Werkzeug angeordnet ist, dass die Kunststoffschmelze aus dem Hohlraum seitlich auf die Grenzfläche aufbringbar ist.

Vorzugsweise kann hierbei das Volumen des Hohlraums mittels eines in der Wand des Werkzeugs eingebrachten, beweglichen Stempels einstellbar sein, wobei der Stempel zu diesem Zweck über einen zum Bewegen des Stempels eingerichteten Antrieb verfügen kann.

Weiterhin können der Stempel und/oder mindestens eine an den Hohlraum angrenzende Wand eine Heizeinrichtung aufweisen, insbesondere in Form eines elektrisch beheizbaren Heizelements und/oder in Form mindestens einer Zu- und Abführung für ein oder mehrere Fluide mit erhöhter Temperatur. Dadurch kann insbesondere eine vorzugsweise konstante oder dynamische Erhöhung der Temperatur auf den an den Hohlraum angrenzenden Oberflächen erzielt werden, um zu verhindern, dass die Kunststoffschmelze in dem Hohlraum fest werden und damit nicht mehr in den an den Hohlraum angrenzenden Bereich der Kavität gedrückt kann.

Für weitere Einzelheiten in Bezug auf die vorliegende Vorrichtung wird auf die Beschreibung des Verfahrens und der Ausführungsbeispiele verwiesen.

### Vorteile der Erfindung

Das vorliegende Verfahren ermöglicht es, das Auftreten von Grenzflächen in Form von Bindenähten und/oder Fließnähten und/oder Mehrkomponentengrenzflächen während der Herstellung eines Formkörpers in einem Spritzgießverfahren zu vermeiden oder ihre Auswirkungen in Hinblick auf optische Klarheit und mechanische Festigkeit des Formkörpers zu begrenzen. Besonders vorteilhaft ist es hierbei, dass hierzu nicht der gesamte Formkörper durchströmt werden muss, sondern lediglich der Bereich, in welchem sich die Grenzfläche voraussichtlich befindet. Dies ermöglicht es, auch Formkörper mit einer komplexen dreidimensionalen Geometrie mittels des Spritzgießverfahrens mit verbesserten Eigenschaften herzustellen. Diese Verfahren und Vorrichtungen sind hierbei für eine Vielzahl von Kunststoffen, insbesondere auch für gefüllte Kunststoffe, anwendbar.

Insbesondere ermöglichen es derartige Verfahren und Vorrichtungen, die mechanische Festigkeit von Grenzflächen, welche sich bei der Herstellung des Formkörpers in dem Spritzgießverfahren ausbilden können, zu erhöhen. Auf diese Weise lässt sich die mechanische Festigkeit von Formkörpern auch dann erhöhen, wenn diese aufgrund ihrer Herstellung entsprechende Grenzflächen aufweisen. Gegenüber den aus dem Stand der Technik bekannten Verfahren und Vorrichtungen kann dies mit geringem Aufwand in Bezug auf eine Modifikation des Werkzeugs als auch im Hinblick auf den Energieverbrauch erfolgen. Insbesondere können auch bereits vorhandene Werkzeuge für das Spritzgießverfahren mit entsprechenden Hohlräumen und zugehörigen Antrieben ausgestattet werden und sich damit für eine Verwendung gemäß dem vorliegenden Verfahren eignen.

### Kurze Beschreibung der Figuren

Ein bevorzugtes Ausführungsbeispiel der vorliegenden Erfindung ist in den Figuren dargestellt und wird in der nachfolgenden Beschreibung ohne Beschränkung der Allgemeinheit näher erläutert. Hierbei zeigen:
- Figur 1: eine schematische Darstellung einer Ausbildung einer Grenzfläche in Form einer Bindenaht bei einem Aufeinandertreffen von Fließfronten während eines Spritzgießvorgangs (Stand der Technik); und
- Figur 2 A und B: ein Ausführungsbeispiel für einen Einsatz einer erfindungsgemäßen Vorrichtung zur Beeinflussung der Ausbildung der Bindenaht bei dem Aufeinandertreffen der Fließfronten während des Spritzgießvorgangs.

### Ausführungsformen der Erfindung

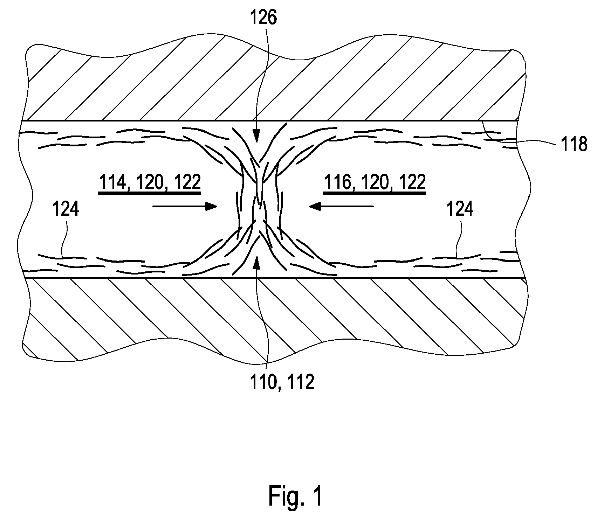

Figur 1 zeigt schematisch eine aus dem Stand der Technik bekannte Ausbildung einer Grenzfläche 110 bei einem Aufeinandertreffen von zwei Fließfronten 114, 116 während eines Spritzgießvorgangs in einer Kavität 118 eines Werkzeugs für ein Spritzgießverfahren, wobei die Grenzfläche 110 im vorliegenden Falle beispielhaft in Form einer Bindenaht 112 ausgestaltet ist. Zur Ausbildung der beiden Fließfronten 114, 116 wurde in der Darstellung gemäß Figur 1 eine Kunststoffschmelze 120 aus einem gefüllten Kunststoff verwendet, welcher über eine Kunststoffmatrix 122 verfügt, in die intransparente langgestreckte Fasern 124 als weitere Bestandteile eingebracht sind. Zur Vereinfachung der Darstellung sind in Figur 1 die Fasern 124 lediglich am Rande einer Fließfront zur Fließrichtung aufgezeigt.

Ohne eine Anwendung der erfindungsgemäß vorgeschlagenen Maßnahmen kommen, wie aus Figur 1 hervorgeht, die hier frontal aufeinandertreffenden Fließfronten 114, 116 in einem Bereich 126 der Kavität 118 zu einem Stillstand und führen folglich nach einem Abkühlen oder Abkühlenlassen der Kunststoffschmelze 120 in der Kavität 118 des Werkzeugs zu der Ausbildung der Bindenaht 112 in dem gemäß dem Stand der Technik hergestellten Formkörper. Die Bindenaht 112 ist optisch leicht erkennbar, was sich in vielen Fällen durchaus störend bemerkt machen kann. Darüber hinaus kann der auf diese Weise hergestellte Formkörper in dem Bereich 126 der Bindenaht 112 eine teilweise deutlich verringerte mechanische Festigkeit aufweisen.

Die Figuren 2A und B zeigen ein schematisches Ausführungsbeispiel für einen Einsatz einer erfindungsgemäßen Vorrichtung zur Beeinflussung der Ausbildung der Grenzfläche 110 in Form der Bindenaht 112 in dem Bereich 126, in welchem die Fließfronten 114, 116 während des Spritzgießvorgangs aufeinandertreffen. Um die Ausbildung der Bindenaht 112 beeinflussen zu können, verfügt die erfindungsgemäße Vorrichtung über ein Werkzeug mit einer Kavität 118, welche zur Aufnahme der Kunststoffschmelze 120 eingerichtet ist. Im Unterschied zum Spitzgießverfahren nach dem in Figur 1 schematisch dargestellten Stand der Technik wird gemäß Schritt b) des vorliegenden Verfahrens die Kunststoffschmelze 120 nicht nur in die Kavität 118 des Werkzeugs eingefüllt, sondern ein bestimmter Teil der Kunststoffschmelze 120 gelangt auch in den zusätzlich Hohlraum 128, welcher, ohne über ein eigenes Angusssystem zu verfügen, in dem Bereich 126 in eine Wand 130 der Kavität 118 des Werkzeugs eingebracht ist. Der Hohlraum 128 weist ein Volumen 132 auf, dessen Ausdehnung mittels eines beweglichen Stempels 134 eingestellt werden kann.

In der Darstellung gemäß Figur 2A ist der in die Wand 126 des Werkzeugs eingebrachte Hohlraum 128 durch eine Betätigung eines zugehörigen Antriebs zum Bewegen der Stempelfläche 136 des beweglichen Stempels 134 geöffnet. Die Bewegung des Stempels 134 erfolgt in diesem Ausführungsbeispiel mittels eines in das Werkzeug eingebrachten hydraulischen Kernzugs. Allerdings sind auch andere Arten des Antriebs denkbar, etwa ein elektrischer oder ein rein mechanischer Antrieb. Hierdurch wird, wie Figur 2 A schematisch zeigt, gemäß Schritt b) des vorliegenden Verfahrens auch das Volumen 132 des Hohlraums 128 nahezu vollständig mit dem bestimmten Teil der Kunststoffschmelze 120, gefüllt. Aber auch hier bildet sich, wie aus Figur 2A hervorgeht, in dem Bereich 126 die während des Spritzgießvorgangs aufeinandertreffenden Fließfronten 114, 116 nach wie vor die Grenzfläche 110 in Form der Bindenaht 112 aus.

Figur 2B zeigt, wie die Ausbildung der Grenzfläche 110 in Form der Bindenaht 112 mittels des vorliegenden Verfahrens und der vorliegenden Vorrichtung beeinflusst werden können. Gemäß Schritt c) des vorliegenden Verfahrens wird hierzu im Anschluss an das Füllen des Hohlraums 128 mit der Kunststoffschmelze 120 und des Erwärmens einer Wand des Hohlraums 128 und/oder der an den Bereich 126 angrenzenden Wand 130, um die Kunststoffschmelze 120 in einer Form als Schmelze zu halten, das Volumen 132 des Hohlraums 128 mittels einer Bewegung des Stempels 134 derart verringert, dass in diesem Ausführungsbeispiel die Stempelfläche 136 die an den Hohlraum 128 angrenzende Wand 130 des Werkzeugs erreicht hat und mit dieser zusammen eine nahezu ebene Fläche ausbildet. Es ist allerdings auch möglich, das Volumen 132 des Hohlraums 128 derart zu verringern, dass noch ein Hohlraum 128 mit einem geringem Volumen 132 als in Figur 2A verbleibt.

Durch die in Figur 2B schematisch dargestellte Verringerung des Volumens des Hohlraums 128 wird im vorliegenden Falle die zuvor gemäß der Darstellung in Figur 2A in dem Hohlraum 128 eingebrachte Kunststoffschmelze 120 vollständig aus dem Hohlraum 128 derart in den an den Hohlraum 128 angrenzenden Bereich 126 der Kavität 118 gedrückt, dass der Teil der Kunststoffschmelze 120 seitlich auf die Grenzfläche 110 in Form der Bindenaht 112 aufgebracht wird. Durch das in Figur 2B gezeigte Zurückdrücken des Teils der Kunststoffschmelze 120, welcher sich in dem Hohlraum 128 befindet, aus dem Hohlraum 128 heraus in den an den Hohlraum 128 angrenzenden Bereich 126 der Kavität 118 lässt sich somit auf erfindungsgemäße Weise Einfluss auf die Ausgestaltung der in dem Bereich 126 der Kavität 118 auftretenden Grenzfläche 110 zwischen den beiden dort zusammentreffenden Kunststoffschmelzen 114, 116 nehmen. Hierdurch wird, wie aus Figur 2B hervorgeht, die in den Figuren 1 und 2A dargestellte Grenzfläche 110 in Form der Bindenaht 112 in eine gewünschte, für den Fachmann weniger störende Richtung verändern. Darüber hinaus können hier ebenfalls als Folge des beschriebenen Einflusses auch die Fasern 124 in der Kunststoffmatrix 122 zu einem überwiegenden Teil rückorientiert werden.

Im Unterschied zu der Darstellung in Figur 1 wird hierbei nach dem Abkühlen oder Abkühlenlassen der Kunststoffschmelze 120 in der Kavität 118 des Werkzeugs keine ausgeprägte Grenzfläche 110, etwa in Form der Bindenaht 112 erhalten. Die fehlende Bindenaht 112 ist optisch leicht erkennbar. Darüber hinaus verfügt der auf erfindungsgemäße Weise hergestellte Formkörper auch in dem Bereich 126 der Bindenaht 112 über eine nahezu gleichbleibende mechanische Festigkeit.

### Liste der Bezugszeichen

- 110: Grenzfläche
- 112: Bindenaht
- 114: Fließfront
- 116: Fließfront
- 118: Kavität
- 120: Kunststoffschmelze
- 122: Kunststoffmatrix
- 124: Fasern
- 126: Bereich
- 128: Hohlraum
- 130: Wand des Werkzeugs
- 132: Volumen
- 134: Stempel
- 136: Stempelfläche

## Patentansprüche

1. Verfahren zur Beeinflussung eines Zusammentreffens von mindestens zwei Kunststoffschmelzen (120) während einer Herstellung eines Formkörpers in einem Spritzgießverfahren, mit den folgenden Schritten:
a) Bereitstellen eines Werkzeugs mit mindestens einer Kavität (118) zur Aufnahme einer Kunststoffschmelze (120), wobei das Werkzeug derart ausgestaltet ist, dass bei einem Einfüllen der Kunststoffschmelze (120) in das Werkzeug in mindestens einem Bereich (126) der Kavität (118) sich durch das Zusammentreffen der mindestens zwei Kunststoffschmelzen (120) eine Grenzfläche (110) zwischen den Kunststoffschmelzen (120) ausbildet, wobei das Werkzeug an einer, an den Bereich (126) angrenzenden Wand (130) über einen Hohlraum (128) mit einem einstellbaren Volumen (132) verfügt;
b) Einbringen der Kunststoffschmelze (120) in die Kavität (118) des Werkzeugs unter Druck derart, dass auch das Volumen (132) des Hohlraums (128) mit einem Teil der Kunststoffschmelze (120) gefüllt wird;
c) Verringern des Volumens (132) des Hohlraums (128), wodurch zumindest ein Teil der Kunststoffschmelze (120) aus dem Hohlraum (128) derart in den an den Hohlraum (128) angrenzenden Bereich (126) der Kavität (118) gedrückt wird, dass der Teil der Kunststoffschmelze (120) seitlich auf die Grenzfläche (110) aufgebracht wird;
d) Abkühlen oder Abkühlenlassen der Kunststoffschmelze (120) in der Kavität (118) des Werkzeugs zumindest teilweise unter Aufrechterhaltung des Drucks, wodurch der Formkörper gebildet wird; und
e) Entformen des Formkörpers aus der Kavität (118) des Werkzeugs.

2. Verfahren nach dem vorangehenden Anspruch, wobei das Verfahren derart als diskontinuierliches Verfahren ausgeführt wird, dass nach Schritt e) das Verfahren erneut mit Schritt b) fortgesetzt wird.

3. Verfahren nach einem der vorangehenden Ansprüche, wobei Schritt c) vor oder während Schritt d) erfolgt.

4. Verfahren nach einem der vorangehenden Ansprüche, wobei das Werkzeug an einer, an den Bereich (126) angrenzenden Wand (130) über genau einen Hohlraum (128) mit einem einstellbaren Volumen (132) verfügt.

5. Verfahren nach einem der vorangehenden Ansprüche, wobei das Volumen (132) des Hohlraums (128) mittels eines in der Wand (130) des Werkzeugs befindlichen, beweglichen Stempels (134) eingestellt wird und das Verringern des Volumens (132) des Hohlraums (128) gemäß Schritt c) durch Bewegen einer Stempelfläche (136) in Richtung der Kavität (118) erfolgt.

6. Verfahren nach dem vorangehenden Anspruch, wobei der Stempel (134) über einen Antrieb verfügt und das Bewegen der Stempelfläche (136) durch Betätigen des Antriebs erfolgt.

7. Verfahren nach einem der beiden vorangehenden Ansprüche, wobei das Verringern des Volumens (132) des Hohlraums (128) gemäß Schritt c) solange erfolgt, bis die Stempelfläche (136) die an den Hohlraum (128) angrenzende Wand (130) im Werkzeug erreicht hat.

8. Verfahren nach einem der drei vorangehenden Ansprüche, wobei mindestens eine Wand des Hohlraums (128) und/oder der Stempel (134) zumindest teilweise vor und/oder während Schritt b) beheizt werden.

9. Verfahren nach einem der vorangehenden Ansprüche, wobei für die während Schritt b) in das Werkzeug eingefüllte Kunststoffschmelze (120) ein in einen Schmelzzustand gebrachter Kunststoff oder gefüllter Kunststoff eingesetzt wird.

10. Vorrichtung zur Beeinflussung eines Zusammentreffens von mindestens zwei Kunststoffschmelzen (120) während einer Herstellung eines Formkörpers in einem Spritzgießverfahren, umfassend ein Werkzeug mit mindestens einer Kavität (118) zur Aufnahme einer Kunststoffschmelze (120), wobei das Werkzeug derart ausgestaltet ist, dass bei einem Einfüllen der Kunststoffschmelze (120) in das Werkzeug in mindestens einem Bereich (126) in der Kavität (118) durch das Zusammentreffen der mindestens zwei Kunststoffschmelzen (120) eine Grenzfläche (110) ausbildbar ist, wobei das Werkzeug an einer, an den Bereich (126) angrenzenden Wand (130) des Werkzeugs über einen Hohlraum (128) mit einem einstellbaren Volumen (132) verfügt, wobei der Hohlraum (128) derart angeordnet ist, dass die Kunststoffschmelze (120) aus dem Hohlraum (128) seitlich auf die Grenzfläche (110) aufbringbar ist.

11. Vorrichtung nach dem vorangehenden Anspruch, wobei das Volumen (132) des Hohlraums (128) mittels eines in der Wand (130) des Werkzeugs eingebrachten, beweglichen Stempels (134) einstellbar ist.

12. Vorrichtung dem vorangehenden Anspruch, wobei der Stempel (134) über einen zum Bewegen des Stempels (134) eingerichteten Antrieb verfügt.

13. Vorrichtung einem der beiden vorangehenden Ansprüche, wobei mindestens eine Wand des Hohlraums (128) und/oder der Stempel (134) über mindestens eine Heizeinrichtung verfügt.

14. Vorrichtung einem der vier vorangehenden Ansprüche, wobei das Werkzeug an einer, an den Bereich (126) angrenzenden Wand (130) über genau einen Hohlraum (128) mit einem einstellbaren Volumen (132) verfügt.
